# EUROPEAN PATENT APPLICATION

(11) **EP 3 147 179 A1**
(43) Date of publication of application: **29.03.2017**
(21) Application number: 15796648.2
(22) Date of filing: 12.05.2015
(51) Int. Cl.: B62D 7/15, B62D 3/12, B62D 5/04, B62D 7/08

(54) **STEERING DEVICE CONTROL METHOD AND VEHICLE**

(30) Priority: 21.05.2014 JP 2014105300
(71) Applicant: NTN Corporation, Osaka-shi, Osaka 550-0003 (JP)
(72) Inventor: INOKUCHI Kazuyuki, Iwata-shi Shizuoka 438-0037 (JP)
(74) Representative: Grünecker Patent- und Rechtsanwälte PartG mbB
(86) International application number: PCT/JP2015/063604
(87) International publication number: WO 2015/178247

(57) **Abstract**

A method of controlling a steering device including a pair of rack bars (53 and 54) capable of steering right and left wheels (w) in one and/or the other of opposite right and left directions, and a coupling mechanism (63) which moves the rack bars (53 and 54) in the right direction and/or the left direction by the same distance. The method includes the step of issuing a command to couple or uncouple the coupling mechanism, and the step of driving at least one of an engaging part (63a) and a receiving part (63b) of the coupling mechanism (63) relative to the other if a coupling state sensing means (78) are unable to detect that the coupling mechanism (63) has been coupled or uncoupled when a predetermined time has passed after issuing the command.

## Description

### BACKGROUND ART

This invention relates to a method of controlling steering devices of a four-wheel steering mechanism of a vehicle which allows smooth steering of the wheels of the vehicle, and the vehicle in which is used this method.

### BACKGROUND ART

A steering mechanism known as an Ackerman-Jeantaud steering mechanism includes a steering link mechanism connecting together right and left vehicle wheels (an assembly including a tire, a rim, a hub, an in-wheel motor, etc. is hereinafter referred to as a "vehicle wheel" or simply a "wheel"), and used to steer the vehicle wheels. This steering mechanism includes tie rods and knuckle arms such that while the vehicle is turning, the right and left wheels move around the same center point.

One of such steering mechanisms is disclosed in the below-identified Patent document 1. The vehicle of Patent document 1 includes at least one such steering mechanism, which includes tie rods and knuckle arms, for either the front right and front left wheels or the rear right and rear left wheels. The steering mechanism includes an actuator capable of changing either the distance between the right and left tie rods, or the angles between the respective wheels and the knuckle arms, thereby allowing smooth normal travel mode, parallel movement mode, and small-radius turning mode.

The below-identified Patent document 2 discloses steering mechanisms each including a steering shaft disposed between the front right and front left wheels or between the rear right and rear left wheels, and comprising two right and left split steering shaft members, and a normal-reverse switching means disposed between the split steering shaft members and capable of switching the rotational direction of the split steering members between the normal rotation and the reverse rotation. The switching means thus allows, for example, lateral movement of the vehicle by steering the wheels by 90 degrees.

The below-identified Patent document 3 discloses a four-wheel steering vehicle which is configured such that the rear wheels are steered by an actuator corresponding to the steering of the front wheels. The below-identified Patent document 4 discloses a steering mechanism including a rack housing connecting the right and left wheels and movable in the fore-and-aft direction, to make toe adjustments of the right and left wheels, thereby increasing the travel stability of the vehicle.

The below-identified patent document 5, which is an invention of the present applicant, discloses a steering mechanism including a pair of rack bars movable in the right-and-left direction independently of each other, and connected to the respective right and left wheels via tie rods. The rack bars can be moved in opposite directions to each other by synchronizing gears retained in a synchronizing gear box, relative to the synchronizing gear box. The steering mechanism further includes pinion gears in mesh with the respective rack bars, and a coupling mechanism provided between the pinion gears and capable of coupling and uncoupling the rotary shafts of the pinion gears. When the pinion gears are coupled together by the coupling mechanism, the rack bars are moved in the same direction by the same distance, together with each other, so that the right and left wheels are steered in the same direction. When the pinion gears are uncoupled from each other by the coupling mechanism, the rack bars are moved in opposite directions to each other by the same distance, so that the right and left wheels are steered in opposite directions to each other. Thus, the travel state of the vehicle can be freely changeable (between a normal travel mode and one of special travel modes including a pivot turn mode).

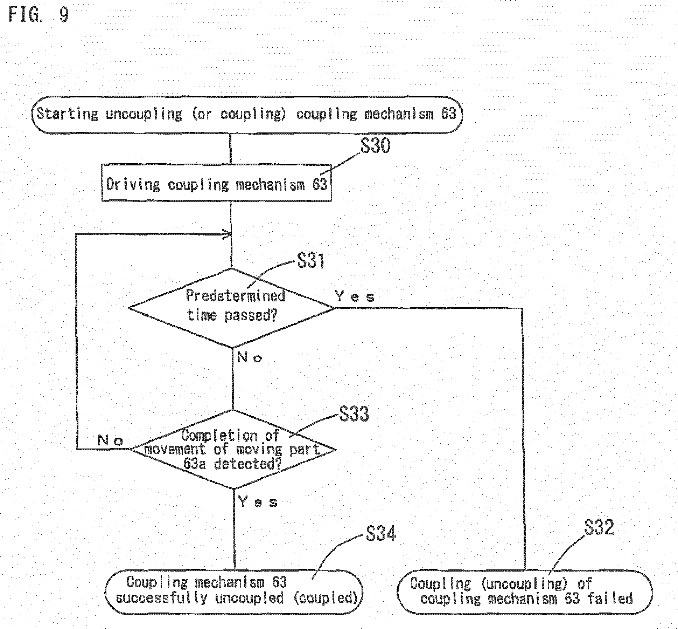

The coupling mechanism includes a receiving part (fixed part), an engaging part (moving part), and a coupling state sensing means capable of confirming whether or not the receiving part and the engaging part have been successfully coupled together or uncoupled from each other in a normal manner. The flow of abnormality determination by the coupling state sensing means while the travel state is being changed from one travel mode to another is described with reference to Fig. 9.

A processing means first applies, to the coupling mechanism, a command to uncouple or couple the coupling mechanism (Step S30). If the processing means fails to receive, from the coupling state sensing means, a signal indicative of the completion of coupling or uncoupling of the coupling mechanism after a predetermined time has passed ("Yes" in Step S31), the processing means determines that the coupling or uncoupling of the coupling mechanism has failed (Step S32), and notifies the driver of this fact. When the predetermined time has not yet passed ("No" in Step S31), the processing means determines whether or not the moving part of the coupling mechanism has been moved to the coupled or uncoupled position based on the signal from the coupling state sensing means, and if the moving part has reached the coupled or uncoupled position ("Yes" in Step S33), the processing means determines that the coupling mechanism has been successfully coupled or uncoupled (Step S34), and terminates the coupling or uncoupling procedure.

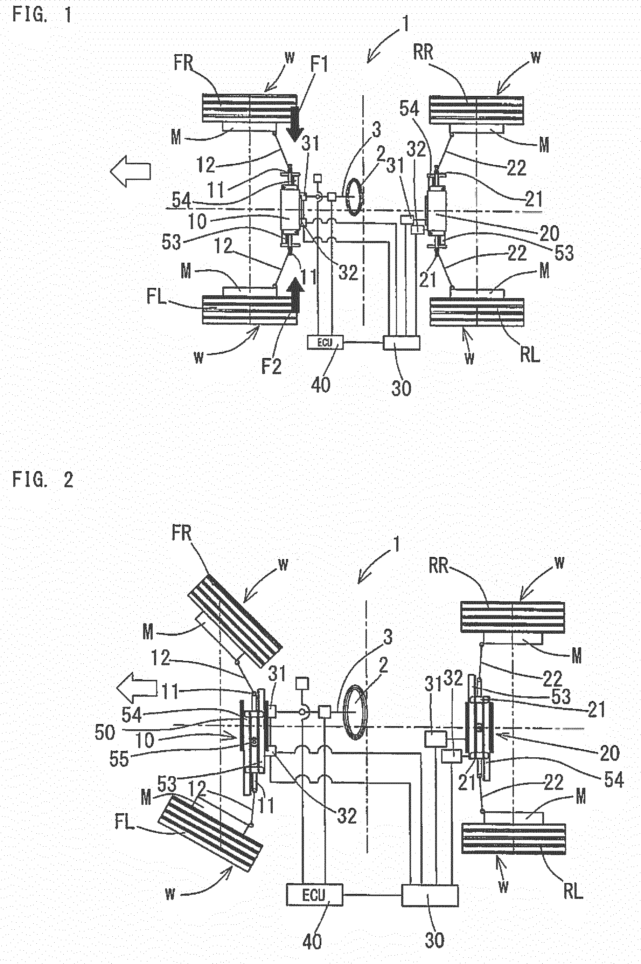

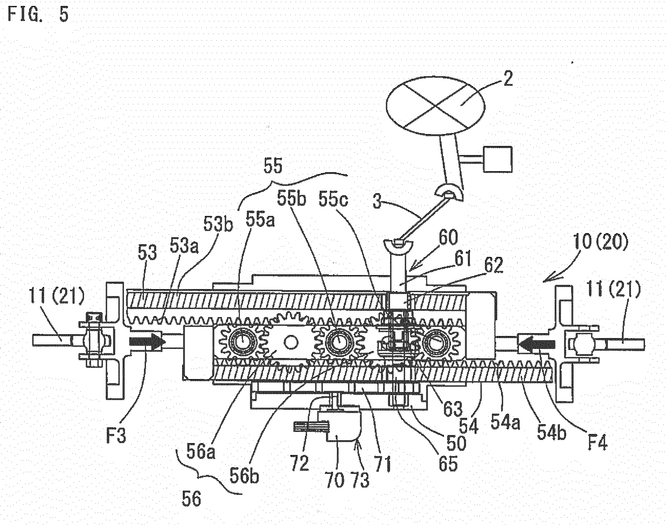

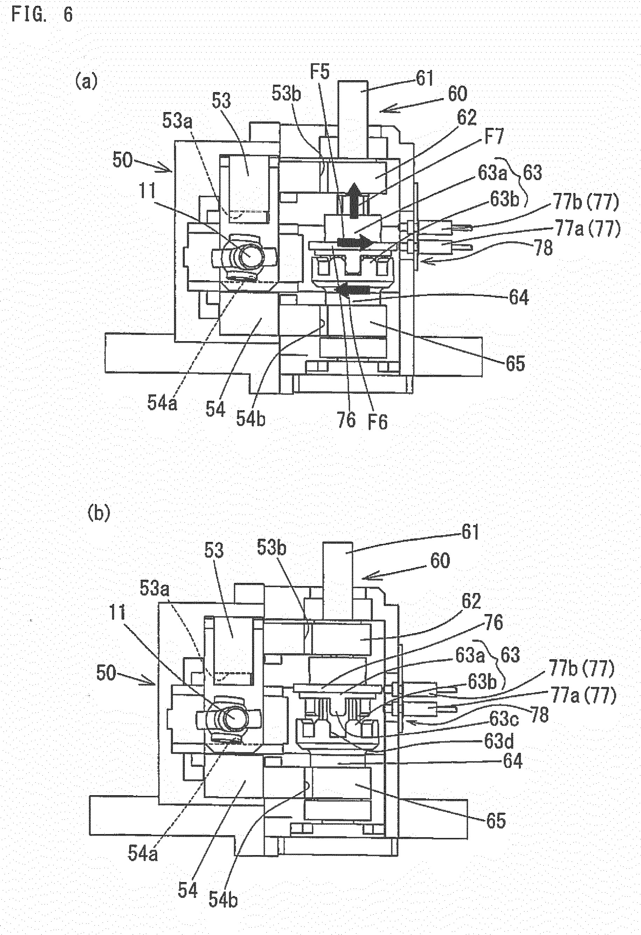

One possible cause of the failure of the coupling mechanism to be uncoupled or coupled would be the receiving part and the engaging part getting stuck on each other such that the engaging part cannot be pulled away from or fitted to the receiving part. The receiving part and the engaging part get stuck on each other when external forces (indicated by the arrows F1 and F2 in Fig. 1) are applied to the right and left wheels w such that the right and left wheels w are steered in opposite directions to each other, due to uneven distribution of the vehicle weight to the wheels when the vehicle is on a inclined road surface, friction between the wheels and the road surface, the reaction force to the elastic deformation of the tires, etc. That is, the external forces F1 and F2 are transmitted via the tie rods 12 and 22 and connecting members 11 and 21 to the respective rack bars 53 and 54 as loads in opposite right and left directions relative to the direction in which the vehicle is moved in a straight line (loads indicated by the arrows F3 and F4 in Fig. 5). Due to the loads F3 and F4, torques that are opposite in direction are generated, respectively, in the engaging part 63a (moving part) of the coupling mechanism 63, which is provided on the side of the rack bar 53, and the receiving part 63b (fixed part) of the coupling mechanism 63, which is provided on the side of the rack bar 54 (these torques are shown by the arrows F5 and F6 in Fig. 6(a)). These torques in turn generate friction between the engaging part 63a and the receiving part 63b, thus causing the engaging part 63a and the receiving part to get stuck on each other.

Once the engaging part 63a and the receiving part 63b get stuck on each other, even when an axial driving force (force indicated by the arrow F7 in Fig. 6(a)) is applied to at least one of the engaging part 63a and the receiving part 63b to uncouple them from each other, they cannot be smoothly uncoupled from each other. Conversely, when the engaging part 63a is to be coupled to the receiving part 63b, if the engaging part 63a and the receiving part 63b are displaced from each other in the rotational direction, a frictional force is generated therebetween while they are being coupled, and this frictional force makes smooth coupling difficult.

By detecting whether or not the coupling mechanism has been successfully coupled or uncoupled based on a signal from the coupling state sensing means, and notifying the drive of an abnormal state, it is possible to prevent the driver from operating the steering wheel without noticing the fact that the coupling mechanism is not sufficiently uncoupled or coupled, thereby damaging the steering device.

### PRIOR ART DOCUMENTS

### PATENT DOCUMENTS

Patent document 1: JP Patent Publication 04-262971A
Patent document 2: JP Patent 4635754
Patent document 3: JP Utility Model Registration 2600374
Patent document 4: JP Patent Publication 2003-127876A
Patent document 5: JP Patent Application 2013-237830 (not published)

### SUMMARY OF THE INVENTION

### OBJECT OF THE INVENTION

An ordinary Ackerman-Jeantaud steering mechanism allows smooth normal travel because, during normal traveling, the lines perpendicular, in plan view, to the lines of rotation of the respective wheels (widthwise center lines of the wheels) converge on the center of turning of the vehicle. However, even if it is desired to move the vehicle laterally (parallel movement in the lateral direction with respect to the fore-and-aft direction of the vehicle), it is difficult to steer the wheels in the direction perpendicular to the fore-and-aft direction of the vehicle due to the lengths of the steering links and interference with other members. Also, even if one of the right and left wheels is steered by 90 degrees, the one and the other of the right and left wheels never become completely parallel to each other, thus making smooth travel difficult.

Ordinarily, this type of vehicle is configured such that the front wheels as steerable wheels can be steered in a direction in which the vehicle is to be moved, and the rear wheels, which are non-steerable, are kept parallel the fore-and-aft direction of the vehicle. Thus, when the front wheels are steered while the vehicle is moving, the turning circles of the front wheels do not coincide with those of the rear wheels. In particular, while the vehicle is traveling at a low speed, the vehicle turns with the turning circles of the rear wheels located inside of the respective turning circles of the front wheels, and while the vehicle is traveling at a high speed, the vehicle turns with the turning circles of the front wheels located inside of the respective turning circles of the rear wheels due to centrifugal force. This causes the orientation of the vehicle not to coincide with the turning direction of the vehicle. This problem is avoided in a vehicle including a four-wheel steering (4WS) mechanism (four-wheel steering device) which allows steering of both the front and rear wheels, thereby ensuring smooth travel of the vehicle.

Patent document 1 discloses a 4WS vehicle which can be moved laterally and can make a pivot turn. However, since this vehicle needs a large number of actuators to change the lengths of the tie rods, the distance between the tie rods, and the angles between the wheels and the corresponding knuckle arms, control is complicated. The device disclosed in Patent document 2 is not only complicated in structure, but needs a large number of gears in order to steer heels by rotating the rack bars. Thus, plays are created between parts, which make smooth steering of the wheels difficult.

Patent document 3 discloses a conventional four-wheel steering mechanism which allows steering of rear wheels. However, it is difficult to move the vehicle in the lateral direction with this mechanism alone, for the above-described reasons. Patent document 4 discloses a steering mechanism which allows toe adjustment but is unable to perform lateral movement and small-radius turning of the vehicle.

Patent document 5 discloses a four-wheel steering mechanism which is free of the problems of Patent documents 1 to 4, and which allows switching between the normal steering mode and one of special travel mode including the pivot turn mode by steering the right and left wheels forming the four-wheel steering mechanism in opposite directions to each other. However, as described above, if the coupling state sensing means detects abnormality in coupling or uncoupling of the coupling mechanism due e.g., to the parts of the coupling mechanism getting stuck on each other, it is impossible to switch travel modes. A driving mechanism such as an actuator which is large in driving force could prevent the parts of the coupling mechanism from getting stuck on each other, but such a driving mechanism typically increases the power consumption and/or driving time, and is large in size. Thus, such a driving mechanism is not practical.

An object of the present invention is to provide a four-wheel steering vehicle which is, if abnormality occurs in coupling or uncoupling of a coupling mechanism used to drive rack bars, capable of eliminating such abnormality, thus allowing smooth steering of wheels.

### MEANS FOR ACHIEVING THE OBJECT

In order to achieve this object, the present invention provides a method of controlling a steering device including a pair of rack bars capable of steering right and left wheels in one and/or the other of opposite right and left directions, respectively, and a coupling mechanism disposed between the pair of rack bars and including an engaging part provided on a side of one rack bar of the pair of rack bars, and a receiving part provided on a side of the other rack bar of the pair of rack bars, the steering device being configured such that when the engaging part and the receiving part are coupled to each other, the pair of rack bars are moved in one or the other of the opposite right and left directions by a same distance by the coupling mechanism, and when the engaging part and the receiving part are uncoupled from each other, the pair of rack bars are moved in the respective opposite right and left directions by the same distance,
the method comprising the steps of:
applying, to the coupling mechanism, a command to either couple the engaging part and the receiving part to each other, or uncouple the engaging part and the receiving part from each other; and
performing a relative driving operation in which at least one of the engaging part and the receiving part are driven relative to the other of the engaging part and the receiving part with at least one steering drive means, if a coupling state sensing means provided at the coupling mechanism fails to sense that the engaging part has been coupled to or uncoupled from the receiving part when a predetermined time has passed after the command is applied.

If, the coupling or uncoupling of the engaging part and the receiving part is not confirmed when a predetermined time has passed after applying the above command, the engaging part and the receiving part cannot, most probably, be pulled away from each other or cannot be fitted to each other, due to the engaging part and the receiving part getting stuck on each other. If the engaging part and the receiving part get stuck on each other, the steering drive means drives at least one of the engaging part and the receiving part relative to each other, thereby canceling out an external force that causes the engaging part and the receiving part getting stuck on each other. As a result, the engaging part and the receiving part become movable relative to each other, so that the wheels can be steered smoothly.

In this arrangement, the pair of rack bars may be connected to the respective right and left wheels via respective tie rods, the steering device may further comprise a synchronizing gear disposed between the pair of rack bars and configured to convert a movement of the one rack bar in either one of the opposite right and left directions to a movement of the other rack bar in the other of the opposite right and left directions, and the steering device may further comprise a rack bar moving means including a first pinion gear in mesh with the one rack bar, a second pinion gear in mesh with the other rack bar, and the coupling mechanism, the coupling mechanism being disposed between the first pinion gear and the second pinion gear.

In either of the above arrangements, the direction of the relative driving operation by the at least one steering drive means may be reversed, and every time the direction is reversed, the driving force for the relative driving operation may be increased.

This method may further comprise the step of terminating the relative driving operation if the coupling state sensing means fails to sense that the engaging part has been coupled to or uncoupled from the receiving part as a result of the relative driving operation, based on determination that the coupling mechanism is malfunctioning.

The at least one steering drive means may comprise one of a mode switching actuator, a normal steering actuator, and an in-wheel motor.

Alternatively, the at least one steering drive means may comprise a plurality of steering drive means selected from a mode switching actuator, a normal steering actuator, and an in-wheel motor, and configured to be driven either simultaneously or alternately with each other.

The method for controlling a steering device may be used in a vehicle including a four-wheel steering mechanism.

### ADVANTAGES OF THE INVENTION

According to the present invention, in uncoupling and coupling a coupling mechanism used to drive the rack bars, if uncoupling or coupling of the coupling mechanism is not confirmed when a predetermined time has passed after applying a command to uncouple or couple the coupling mechanism, a steering drive means drives at least one of the engaging part and the receiving part relative to the other. As a result, the engaging part and the receiving part again become movable relative to each other, so that they can be coupled to or uncoupled from each other with a small driving force. This makes it possible to use a smaller driving source, such as an actuator, which consumes less energy.

### BRIEF DESCRIPTION OF THE DRAWINGS

Fig. 1 is a plan view of a vehicle in which a method of controlling a steering device according to the present invention is used.
Fig. 2 is a plan view of the vehicle shown in Fig. 1, showing a normal travel mode (normal steering mode).
Fig. 3 is a plan view of the vehicle shown in Fig. 1, showing a pivot turn mode.
Fig. 4 is a plan view of the vehicle shown in Fig. 1, showing a lateral movement mode (parallel movement mode).
Fig. 5 is a back view of a steering device used in the vehicle shown in Fig. 1, showing its interior.
Figs. 6(a) and 6(b) are back views of a coupling mechanism used in the steering device shown in Fig. 5, showing its coupled state (Fig. 6(a)) and its uncoupled state (Fig. 6(b)).
Fig. 7 is a block diagram showing how the vehicle is controlled.
Fig. 8 shows a flow of abnormality determination when switching travel modes, according to the present invention.
Fig. 9 shows a flow of abnormality determination when switching travel modes, in a conventional arrangement.

### BEST MODE FOR EMBODYING THE INVENTION

The vehicle embodying the present invention is described with reference to the drawings. In particular, description is first made of the steering mechanism of the vehicle and various travel modes, and then a process flow is described in case an abnormal situation occurs when switching the travel mode.

Regarding the steering mechanism of the vehicle and travel modes

Fig. 1 shows the drive train and the control path of the vehicle 1. The vehicle 1 includes front left and front right wheels FL and FR which are coupled to a front steering device 10 through respective tie rods 12, and rear left and rear right wheels RL and RR coupled to a rear steering device 20 through respective tie rods 22.

Each steering device 10 (20) includes two rack bars for steering the right and left wheels w. Of the two rack bars, the rack bar coupled to the wheel on the left of the vehicle with respect to the forward direction of the vehicle is hereinafter referred to as the "first rack bar 53", while the rack bar on the right of the vehicle is referred to as the "second rack bar 54". The forward direction of the vehicle is indicated by the arrow on the left of each of Figs. 1 and 2-4.

The rack bars 53 and 54 of each steering device 10 (20) have connecting members 11 and 21 connected to the right and left pair of front (rear) wheels w through the respective tie rods 12 (22). Members such as knuckle arms are disposed between the tie rods 12 and 22 and the respective wheels w.

As shown in Fig. 5, the first rack bar 53 and the second rack bar 54 of each steering device 10 (20) are received in a rack case (steering cylinder) 50 which extends in the right-and-left direction with respect to the direction in which the vehicle moves in a straight line (i.e., fore-and-aft direction of the vehicle). The rack case 50 is fixedly screwed, directly or indirectly through a flange, to the frame (chassis), not shown, of the vehicle 1.

The steering device 10 (20) includes two magnetic sensors 70 configured to sense the movements of the rack bars 53 and 54 so that it is possible to determine whether the right and left wheels w are being properly steered. The steering devices 10 and 20 each include a first rotary shaft 61 (pinion shaft). The first rotary shaft 61 of the steering device 10 is connected to a steering shat 3 through a steering joint, not shown.

The first rack bar 53 and the second rack bar 54 of each steering device 10 (20) can be moved together with each other to the right or left by the same distance, either directly by the operation of the steering wheel 2 by the driver, or by the actuation of a normal steering actuator 31 which is operatively associated with the operation of the steering wheel 2. Due to this movement, the right and left wheels w are simultaneously steered to the right or left during a normal travel mode (see Fig. 2).

As shown in Fig. 5, the steering device 10 (20) includes a rack bar moving means 60 which is capable of moving the first rack bar 53 and the second rack bar 54 in the opposite directions to each other along the right-and-left direction with respect to the direction in which the vehicle 1 moves in a straight line, namely, along the direction in which the rack bars moves relative to each other (i.e., the direction in which the teeth of the rack bars are arranged). The rack bar moving means 60 includes first synchronizing gears 55 which each mesh with a synchronizing rack gear 53a of the first rack bar 53 and a synchronizing rack gear 54a of the second rack bar 54, which is opposed to the synchronizing rack gear 53a of the first rack bar 53.

The first synchronizing gears 55 comprise three gears 55a, 55b and 55c which are arranged at regular intervals in the direction in which the teeth of each rack gear 53a (54a) are arranged. When the first rack bar 53 moves in either one direction along the direction in which the teeth of the synchronizing rack gear 53a are arranged under a driving force applied to the first rack bar 53 from the rack bar moving means 60, this movement is converted to the movement of the second rack bar 54 in the other direction by the distance equal the distance by which the first rack bar 53 moves in the one direction.

Gears 56a and 56b which constitute second synchronizing gears 56 are disposed, respectively, between the first synchronizing gears 55a and 55b, which are adjacent to each other, and between the first synchronizing gears 55b and 55c, which are adjacent to each other. The second synchronizing gears 56 are in mesh with neither of the synchronizing rack gear 53a of the first rack bar 53 and the synchronizing rack gear 54a of the second rack bar 54, and in mesh with only the first synchronizing gears 55, to allow the three first synchronizing gears 55a, 55b and 55c to be rotated in the same direction by the same angle. The second synchronizing gears 56 thus allow smooth relative movement between the first rack bar 53 and the second rack bar 54. The first rack bar 53 and the second rack bar 54 each include, besides the synchronizing rack gear 53a (54a), a steering rack gear 53b (54b).

As shown in Fig. 5, one of moving amount sensing gears 71 is in mesh with a second pinion gear 65, and one of the moving amount sensing gears 71 is provided with a pulse gear 72 opposed to one of the two magnetic sensors 70, and configured to rotate as the moving amount sensing gears 71 rotate. The magnetic sensor 70 includes a sensing element or a sensing coil for converting a change in magnetic field to an electric signal, and allows measurement of the amount of rotation of the pulse gear 72. The magnetic sensor 70, the moving amount sensing gear 71, and the pulse gear 72 constitute a moving amount sensing means 73 for sensing the amount of movement of the second rack bar 54 to the right and left. While not shown, another moving amount sensing means 73 is provided which is identical to the moving amount sensing means 73 shown, and which is capable of sensing the moving amount of the first rack bar 53 with one of its moving amount sensing gears 71 in mesh with a first pinion gear 62.

When the rack bars 53 and 54 of each steering device 10 (20) are moved to the right and/or left, and the first and second pinion gears 62 and 65 rotate correspondingly, the moving amount sensing gears 71 also rotate correspondingly, thus causing the pulse gears 72 to also rotate correspondingly. The rotation of the pulse gears 72 causes the magnetic sensors 70 to generate electric signals based on which a processing means of the steering device 10 (20) can calculate the numbers of revolutions of the respective pulse gears 72, and thus the steering angles of the right and left wheels w.

The pulse gears 72 used in this embodiment may be replaced with rotary magnetic encoders. Since the pulse gears 72, the rotary magnetic encoders, and the magnetic sensors 70 are less likely to be affected by dust and dirt, the moving amount sensing means 73, mounted on the vehicle 1, is capable of maintaining high sensing accuracy. However, if protective measures against dust and dirt are taken, optical rotation sensor arrangements may be used instead.

Next, the operation of the rack bar moving means 60 of each steering device 10 (20) is described.

The rack bar moving means 60 includes a second rotary shaft 64 arranged coaxially with the first rotary shaft 61, and a second pinion gear 65 mounted to the second rotary shaft 64 so as to be rotatable in unison with the second rotary shaft 64. As shown in Fig. 5, the first pinion gear 62 meshes with the steering rack gear 53b of the first rack bar 53, while the second pinion gear 65 meshes with the steering rack gear 54b of the second rack bar 54.

A coupling mechanism 63 is mounted between the first pinion gear 62 and the second pinion gear 65, and is capable of selectively coupling together the first rotary shaft 61 and the second rotary shaft 64 so as to be not rotatable relative to each other (coupled state, shown in Fig. 6(a)), and uncoupling the first rotary shaft 61 and the second rotary shaft 64 from each other so as to be rotatable relative to each other (uncoupled state, shown in Fig. 6(b)).

As shown in Figs. 6(a) and 6(b), the coupling mechanism 63 includes a moving part 63a (engaging part) provided on the side of the first rotary shaft 61, and a fixed part 63b (receiving part) provided on the side of the second rotary shaft 64. The moving part 63a is biased toward the fixed part 63b by an elastic member, not shown, such as a spring. When the moving part 63a is pushed toward the fixed part 63b by the elastic member until protrusions 63c of the moving part 63a are engaged in recesses 63d of the fixed part 63b (coupled state, shown in Fig. 6(a)), the first and second rotary shafts 61 and 64 are coupled together so as not to be rotatable relative to each other. The protrusions 63c may be formed, not on the moving part 63a, but on the fixed part 63b, with the recesses 63d formed in the moving part 63a.

The moving part 63a of the coupling mechanism 63 can be moved axially upward (in Fig. 6(a)) and away from the fixed part 63b with a force from an external driving source, not shown, such as a push solenoid, until the fixed part 63b is uncoupled from the moving part 63a, and thus first rotary shaft 61 and the second rotary shaft 64 become rotatable independently of each other (uncoupled state, shown in Fig. 6(b)). In this state, the first pinion gear 62 and the second pinion gear 65 are also rotatable independently of each other.

The first pinion gear 62 and the second pinion gear 65 are in mesh with the first rack bar 53 and the second rack bar 54, respectively, and the first rack bar 53 and the second rack bar 54 are both in mesh with the first synchronizing gears 55. Thus, when the first pinion gear 62 is rotated while, as shown in Fig. 6(b), being uncoupled from the second pinion gear 65, the first rack bar 53 is moved in one of the right and left directions of the vehicle 1, i.e. one of the opposite directions along which the rack teeth of the first rack bars 53 are arranged, and the first synchronizing gears 55 rotate, thereby moving the second rack bar 54 in the other of the opposite directions by the same distance the first rack bar 53 is moved in the one of the opposite directions. Corresponding to the movement of the second rack bar 54, the second pinion gear 65 rotates.

Thus, by selectively coupling and uncoupling the first pinion gear 62 and the second pinion gear 65 by means of the coupling mechanism 63, it is possible to easily change between the state in which pair of rack bars 53 and 54 are moved in the same direction by the same distance, and the state in which the pair of rack bars 53 and 54 are moved in opposite directions to each other by the same amount.

As shown in Figs. 6(a) and 6(b), the moving part 63a is formed with a protruding portion 76 (sensed portion) protruding outwardly from the outer periphery of the moving part 63a such that when the coupling mechanism 63 is coupled and uncoupled, the protruding portion 76 moves together with the moving part 63a in the axial direction of the moving part 63a. The coupling mechanism 63 further includes an induction type proximity sensor 77a (77) located so as to face the moving part 63a when the coupling mechanism 63 is coupled, thereby sensing the coupled state of the coupling mechanism 63, and an induction type proximity sensor 77b (77) located so as to face the moving part 63a when the coupling mechanism 63 is uncoupled, thereby sensing the uncoupled state of the coupling mechanism 63. The protruding portion 76a and the induction type proximity sensors 77a and 77b constitute a coupling state sensing means 78. The induction type proximity sensors 77 sense the approach of the protruding portion 76 by sensing the magnetic loss corresponding to the approach of the protruding portion 76.

In the coupled state (Fig. 6(a)), the induction type proximity sensor 77a for sensing the coupled state senses the approach of the protruding portion 76, while the induction type proximity sensor 77b for sensing the uncoupled state does not sense the approach of the protruding portion 76. In the uncoupled state (Fig. 6(b)), the induction type proximity sensor 77a for sensing the coupled state does not sense the approach of the protruding portion 76, while the induction type proximity sensor 77b for sensing the uncoupled state senses the approach of the protruding portion 76.

In this embodiment, the sensed portion is the protruding portion 76, and the sensors 77 are induction type proximity sensors 77a and 77b. Instead, a magnet may be used as the sensed portion, and magnetic sensing elements may be used as the sensors 77. Magnetic sensing elements maintain stable sensing capability and are less likely to malfunction in an environment where there exists a large amount of dust and dirt.

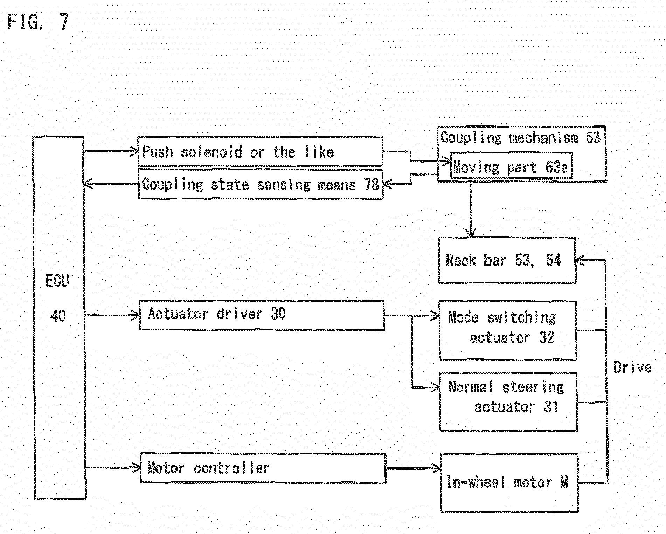

Fig. 7 shows a block diagram of a control arrangement of the embodiment, which includes an electronic control unit (ECU) 40 configured to actuate an external driving source such as a push solenoid to drive the moving part 63a of the coupling mechanism 63 of each steering device 10 (20). Then, the ECU 40 determines whether or not the coupling mechanism 63 has been actually coupled or uncoupled as commanded by the ECU 40, based on the feedback from the coupling state sensing means 78.

When the moving part 63a is separated from the fixed part 63b, the pair of rack bars 53 and 54 become movable in opposite directions to each other. In this state, the state of the steering device 10 (20) is changeable between a normal travel mode and various special travel modes. When the moving part 63a is joined to the fixed part 63b, the pair of rack bars 53 and 54 become movable in the same direction, so that the right and left wheels w can be steered in the same direction.

Various travel modes of the vehicle 1, on which are mounted the steering devices 10 and 20, are now described.

### (Normal travel mode)

With the wheels positioned as shown in Fig. 1, in which the vehicle is movable in a straight line, the coupling mechanism 63 of the first steering device 10 for the front wheels is coupled (as shown in Fig. 6(a)) so that the first rack bar 53 and the second rack bar 54 of the first steering device 10 are movable together with each other in one of the right and left directions, in a rack case 50 of the steering device 10 which is fixed to the frame of the vehicle 1.

When the first rack bar 53 and the second rack bar 54 of the steering device 10 are moved together with each other by the same distance in one of the right and left directions relative to the direction in which the vehicle moves in a straight line, under the driving force from the normal steering actuator 31 or by the operation of the steering wheel 2, the front right and front left wheels w are steered by predetermined angles. Fig. 2 shows the state when the front wheels are steered to the right. Thus, when the two rack bars 53 and 54 are completely fixed to each other, the vehicle 1 can travel in the same manner as ordinary vehicles. During the normal travel mode, the operation of the steering wheel 2 by a driver is transmitted to the front wheels through the steering device 10 for the front wheels, so that the vehicle 1 can be moved in a straight line, or turned right or left by operating the steering wheel 2.

### (Pivot turn mode)

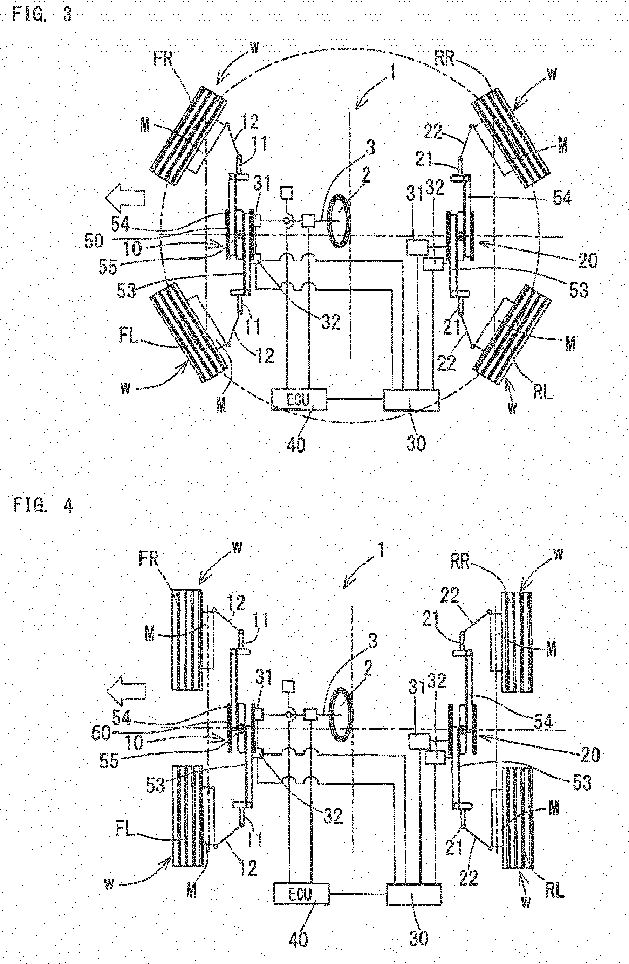

Fig. 3 shows a pivot turn mode. By uncoupling the coupling mechanism 63 (as shown in Fig. 6(b)) of each steering device 10 (20), the first rack bar 53 and the second rack bar 54 of the steering device 10 (20) become separately movable. Thus, when a driving force is applied to the first pinion gear 62 from a mode switching actuator 32, the first rack bar 53 and the second rack bar 54 are moved in opposite directions to each other by the same distance. That is, due to the first synchronizing gears 55 being disposed between the first rack bar 53 and the second rack bar 54, when the first rack bar 53 moves in one of the right and left directions, the second rack bar 54 moves in the other or the right and left directions.

When the first rack bar 53 and the second rack bar 54 of each steering device 10 (20) are moved in opposite directions to each other until all of the four wheels w are positioned such that, as shown in Fig. 3, their respective axes approximately pass through the center of the vehicle, the respective coupling mechanisms 63 are coupled (as shown in Fig. 6(a)). In this state, since all of the four wheels w are positioned such that their axes approximately pass through the center of the vehicle, by actuating the in-wheel motors M mounted in the respective wheels w, the vehicle can be turned with its center stationary (or substantially stationary).

### (Lateral movement mode)

Fig. 4 shows a lateral movement mode, in which with the coupling mechanism 63 uncoupled (as shown in Fig. 6(b) as in the pivot turn mode, the mode switching actuator 32 of each steering device 10 (20) rotates the first pinion gear 62 to move the first rack bar 53 and the second rack bar 54 in each steering device 10 (20) in opposite directions to each other until all of the four wheels w are positioned such that their respective axes extend perpendicular to (i.e. in the right-and-left direction relative to) the direction in which the vehicle moves in a straight line, and in this state, the coupling mechanism 63 is coupled (as shown in Fig. 6(a)) to fix the pair of rack bars 53 and 54 in position.

At that time, it is possible to finely adjust the directions (angles) of the wheels w by moving the first rack bar 53 and the second rack bar 54 in one of the right and left directions relative to the direction in which the vehicle moves in a straight line, under the driving force of the normal steering actuator 31 or by operating the steering wheel 2.

Fig. 4 shows the positional relationship between the steering devices 10 and 20 for the front and rear wheels w, respectively, and the directions of the wheels w, during the lateral movement mode. Compared to during the pivot turn mode, the rack bars 53 and 54 protrude laterally outwardly to a larger degree. Thus, in this mode, the connecting points between the tie rods 12 and 22 and the respective wheels w are located at the outermost positions in the width direction of the vehicle. During the lateral movement mode too, it is possible to finely adjust the directions (angles) of the wheels w under the driving force of the normal steering actuator 31 or by operating the steering wheel 2.

Besides the above-mentioned travel modes, the steering arrangement shown is capable of performing various other travel modes.

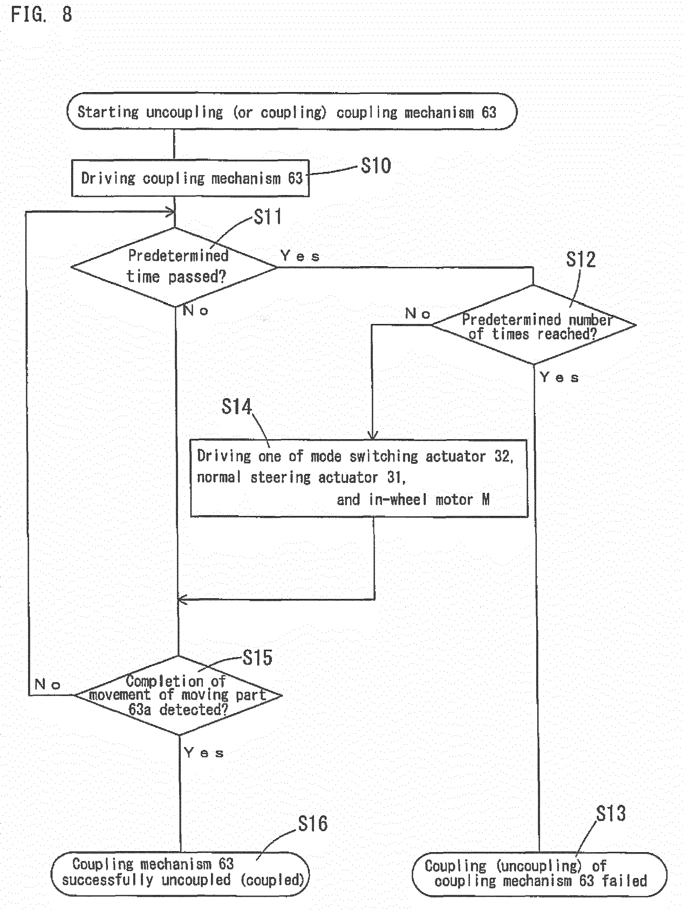

Fig. 8 shows a processing flow according to the present invention which is carried out if abnormality occurs in the steering device 10 or 20 while the steering device is being switched from one travel mode to another.

In this flow, the ECU 40 first generates a driving signal for coupling or uncoupling the coupling mechanism 63 (Step S10). If the ECU 40 fails to receive, within a predetermined time period after generating the driving signal, a signal indicative of completion of coupling or uncoupling of the coupling mechanism 63 from the coupling state sensing means 78 ("Yes" in Step S11), the ECU 40 proceeds to Step S12 in which the ECU 40 determines whether or not it has proceeded to Step S12 more than a predetermined number of times (e.g. three times). If this is not the case ("No" in Step 12), the ECU 40 proceeds to steps for driving steering drive means such as the mode switching actuator. If the number of times the ECU has proceed to Step S12 exceeds the above predetermined number of times ("Yes" in Step S12), the ECU 40 proceeds to step S13 in which it determines that it has failed to couple or uncouple the coupling mechanism 63, terminates the processing flow, and notifies the driver of this fact.

If the ECU 40 determines that abnormality exists during this processing flow, the reason why the coupling mechanism cannot be coupled or uncoupled is most probably not simply due to the moving part and the fixed part getting stuck on each other but due e.g. to wear of the coupling mechanism 63 itself or inclusion of foreign matter in the coupling mechanism 63. Thus, in such a case, the ECU 40 terminates the processing flow (in Step S13) instead of proceeding to the steps for coupling or uncoupling the coupling mechanism 63, thereby preventing the abnormality of the coupling mechanism 63 from becoming more serious.

On the other hand, while the number of times the ECU 40 has proceeded to Step S12 does not exceed the above predetermined number of times ("No" in Step S12), the ECU 40 actuates one of the mode switching actuator 32, the normal steering actuator 31, and each of the in-wheel motors M (as the steering drive means) to rotate the moving part 63a (engaging-part) and the fixed part 63b (receiving part) relative to each other about their axes (Step S14).

At that time, a constant driving force may be applied to the moving part 63a and the fixed part 63b in one direction to rotate them relative to each other. Preferably, however, the direction of such a driving force is reversed, and also, the driving force is gradually increased. With this arrangement, at some point while the driving force is gradually increasing, the driving force necessarily cancels out external forces, thus minimizing the frictional force between the moving part 63a and the fixed part 63b, so that the moving part 63a can be smoothly coupled to or uncoupled from the fixed part 63b at that moment. With this arrangement, compared to an arrangement in which a large driving force is applied to the coupling mechanism 63 from the beginning, the moving part 63a can be coupled to or uncoupled from the fixed part with a minimum necessary driving force, so that it is possible to prevent damage to the coupling mechanism 63.

Instead of applying the driving force of only one of the above-mentioned steering drive means (such as the driving force of only the mode switching actuator 32) to the coupling mechanism 63, the driving forces of more than one of the steering drive means (such as the driving forces of the mode switching actuator 32 and the in-wheel motors M) may be applied, simultaneously or alternately, to the coupling mechanism 63.

After applying the driving force of at least one of the steering drive means (such as the mode switching actuator 32) to the coupling mechanism 63, the ECU 40 determines whether or not the coupling mechanism 63 has been coupled or uncoupled based on the feedback from the coupling state sensing means 78. That is, if the feedback from the coupling state sensing means 78 indicates that the moving part 63a has moved to the predetermined separated position or coupled position ("Yes" in Step S15), the ECU 40 determines that the coupling mechanism 63 has been successfully coupled or uncoupled (Step S16), and terminates the steps for coupling or uncoupling the coupling mechanism 63.

As long as the feedback from the coupling state sensing means 78 does not indicate that the coupling mechanism 63 has been successfully coupled or uncoupled ("No" in Step S15), the ECU 40 continuously checks the feedback from the coupling state sensing means 78 (in Step S11) until a predetermined time period has passed. If the feedback from the coupling state sensing means 78 confirms, before the predetermined time period has passed ("No" in Step S11), that the coupling mechanism 63 has been coupled or uncoupled ("Yes" in Step S15), the ECU 40 determines (in Step S16) that the coupling mechanism 63 has been successfully coupled or uncoupled, and terminates the steps for coupling or uncoupling the coupling mechanism 63.

By applying a driving force to the coupling mechanism 63 from e.g. the mode switching actuator 32 according to the above-described processing flow, it is possible to disengage the moving part 63a and the fixed part 63b of the coupling mechanism 63 from each other, thereby allowing them to be coupled together or uncoupled from each other, and allowing a smooth change in travel mode.

According to this invention, if the moving part 63a and the fixed part 63b of the coupling mechanism 63 get stuck on each other, at least one of them is rotated relative to the other by at least one of the steering drive means to cancel out external forces that cause the moving part to get stuck on the fixed part, thereby disengaging the moving part from the fixed part. Once the moving part disengages from the fixed part, the coupling mechanism 63 can be driven smoothly with a small driving force. Thus, compared to an arrangement in which the moving part 63a is moved against the force with which the moving part get stuck on the fixed part, it is possible to reduce the size of the steering drive means such as an actuator, as well as its energy consumption.

The above described structures of the steering devices 10 and 20, and the vehicle 1, as well as the above-described processing flow for determining abnormality while a travel mode is being switched to another travel mode, are mere examples, and these structures and processing flow may be modified, provided they can achieve the object of the present invention, namely, they allow smooth steering of the wheels of the vehicle, of which the four wheels are steerable, if it becomes impossible or difficult to couple or uncouple one of the coupling mechanisms 63 for driving the rack bars 53 and 54, by allowing smooth coupling or uncoupling of the coupling mechanism 63.

### DESCRIPTION OF THE NUMERALS

- 3.: Steering shaft
- 12, 22,: Tie rod
- 31.: Normal steering actuator
- 32.: Mode switching actuator
- 53, 54: Rack bar
- 55.: Synchronizing gear
- 60.: Rack bar moving means
- 62.: First pinion gear
- 63.: Coupling mechanism
- 63a.: Engaging part (moving part)
- 63b.: Receiving part (fixed part)
- 65.: Second pinion gear
- 78.: Coupling state sensing means
- M.: In-wheel motor
- w.: Wheel

## Claims

1. A method of controlling a steering device including a pair of rack bars (53 and 54) capable of steering right and left wheels (w) in one and/or the other of opposite right and left directions, respectively, and a coupling mechanism (63) disposed between the pair of rack bars (53 and 54) and including an engaging part (63a) provided on a side of one rack bar (53) of the pair of rack bars (53 and 54), and a receiving part (63b) provided on a side of the other rack bar (54) of the pair of rack bars (53 and 54), the steering device being configured such that when the engaging part (63a) and the receiving part (63b) are coupled to each other, the pair of rack bars (53 and 54) are moved in one or the other of the opposite right and left directions by a same distance by the coupling mechanism (63), and when the engaging part (63a) and the receiving part (63b) are uncoupled from each other, the pair of rack bars (53 and 54) are moved in the respective opposite right and left directions by a same distance,
the method comprising the steps of:
applying, to the coupling mechanism (63), a command to either couple the engaging part (63a) and the receiving part (63b) to each other, or uncouple the engaging part (63a) and the receiving part (63b) from each other; and
performing a relative driving operation in which at least one of the engaging part (63a) and the receiving part (63b) are driven relative to the other of the engaging part (63a) and the receiving part (63b) with at least one steering drive means, if a coupling state sensing means (78) provided at the coupling mechanism (63) fails to sense that the engaging part (63a) has been coupled to or uncoupled from the receiving part (63b) when a predetermined time has passed after the command is applied.

2. The method of claim 1, wherein the pair of rack bars (53 and 54) are connected to the respective right and left wheels (w) via respective tie rods (12 and 22), wherein the steering device further comprises a synchronizing gear (55) disposed between the pair of rack bars (53 and 54) and configured to convert a movement of the one rack bar (53) in either one of the opposite right and left directions to a movement of the other rack bar (54) in the other of the opposite right and left directions, and wherein the steering device further comprises a rack bar moving means (60) including a first pinion gear (62) in mesh with the one rack bar (53), a second pinion gear (65) in mesh with the other rack bar (54), and the coupling mechanism (63), the coupling mechanism (63) being disposed between the first pinion gear (62) and the second pinion gear (65).

3. The method of claim 1 or 2, wherein a direction of the relative driving operation by the at least one steering drive means is reversed, and every time the direction is reversed, a driving force for the relative driving operation is increased.

4. The method of any of claims 1-3, further comprising the step of terminating the relative driving operation if the coupling state sensing means (78) fails to sense that the engaging part (63a) has been coupled to or uncoupled from the receiving part (63b) as a result of the relative driving operation, based on determination that the coupling mechanism (63) is malfunctioning.

5. The method of any of claims 1-4, wherein the at least one steering drive means comprises one of a mode switching actuator (32), a normal steering actuator (31), and an in-wheel motor (M).

6. The method of any of claims 1-4, wherein the at least one steering drive means comprises a plurality of steering drive means selected from a mode switching actuator (32), a normal steering actuator (31), and an in-wheel motor (M), and configured to be driven either simultaneously or alternately with each other.

7. A vehicle in which travel modes are changed by the method of any of claims 1-6.
